# EUROPEAN PATENT SPECIFICATION

(11) **EP 1 406 773 B1**
(45) Date of publication and mention of the grant of the patent: **15.12.2010**
(21) Application number: 02787118.5
(22) Date of filing: 09.07.2002
(51) Int. Cl.: B60C 9/22, B60C 9/00, D07B 1/06

(54) **TYRE FOR MOTOR VEHICLES WITH UNDULATED MONOFILAMENTS IN BELT REINFORCEMENT LAYER**
REIFEN FÜR KRAFTFAHRZEUGE MIT GEWELLTEN MONOFILAMENTEN IN GÜRTELVERSTÄRKUNGSSCHICHT
PNEUMATIQUES DE VEHICULE MOTORISE A MONOFILAMENTS ONDULES DANS LA COUCHE DE RENFORCEMENT DE CEINTURE

(30) Priority: 19.07.2001 EP 01117452; 24.07.2001 US 307177 P
(43) Date of publication of application: 14.04.2004
(73) Proprietor: Pirelli Tyre S.p.A., 20126 Milano (IT)
(72) Inventor: RIVA, Guido, I-20155 Milano (IT); DAGHINI, Guido, Luigi, I-20158 Milano (IT); ALMONACIL, Céline, I-23879 Verderio Inferiore (IT)
(74) Representative: Bottero, Claudio
(86) International application number: PCT/EP2002/007617
(87) International publication number: WO 2003/008207

(56) References cited:
- EP-A- 0 332 449
- EP-A- 0 425 318
- EP-A- 0 573 237
- DE-A- 2 048 626
- GB-A- 815 055
- US-A- 5 429 878
- PATENT ABSTRACTS OF JAPAN vol. 1999, no. 01, 29. Januar 1999 (1999-01-29) -& JP 10 263108 A (NOHMI BOSAI LTD), 6. Oktober 1998 (1998-10-06)
- PATENT ABSTRACTS OF JAPAN vol. 1998, no. 06, 30. April 1998 (1998-04-30) & JP 10 044713 A (YOKOHAMA RUBBER CO LTD:THE), 17. Februar 1998 (1998-02-17)
- PATENT ABSTRACTS OF JAPAN vol. 1999, no. 09, 30. Juli 1999 (1999-07-30) -& JP 11 091311 A (SUMITOMO RUBBER IND LTD), 6. April 1999 (1999-04-06)
- PATENT ABSTRACTS OF JAPAN vol. 1999, no. 04, 30. April 1999 (1999-04-30) & JP 11 011113 A (BRIDGESTONE CORP), 19. Januar 1999 (1999-01-19)

## Description

The present invention relates to tyres for motor vehicles provided with an improved belt structure, particularly the present invention relates to high-performance and high-speed tyres.

In general, a tyre comprises a carcass structure provided with at least one carcass ply having reinforcing cords orientated substantially in radial planes containing the rotation axis of the tyre, a tread band extending circumferentially around said carcass structure, a belt structure circumferentially interposed between the carcass structure and the tread band. The belt structure, in turn, comprises at least one pair of belt plies radially superimposed on each other and a reinforcing layer radially external to said one pair of belt plies. Said at least one pair of belt plies extends axially substantially as said tread band, and each belt ply has a plurality of cords which are orientated obliquely with respect to the equatorial plane of the tyre, The cords of one belt ply are laid in the opposite direction to the cords of the belt ply radially adjacent to the latter. Said reinforcing layer, also known as a 0° layer (0° overlay), has reinforcing elements which are substantially parallel to each other and parallel to the equatorial plane of the tyre.

The 0° reinforcing layer is introduced into the tyre structure to reduce the shear deformations between said at least one pair of belt plies radially superimposed on each other, and to preserve the geometry of the tyre at high speeds in such a way as to safeguard the integrity of the tyre and to improve the tyre performance.

In high-performance tyres, the addition of a circumferentially inextensible layer - having reinforcing elements which are substantially parallel to the equatorial plane of the tyre and which oppose the tyre circumferential expansion - in a position radially external to the two belt plies with crossed cords prevents expansions of the tyre during travel even at high speeds.

However, during the moulding of a tyre, the tyre has to be able to expand against the mould, and the presence of a circumferentially inextensible 0° layer would prevent said expansion.

Generally, in tyres for motor vehicles, the 0° reinforcing elements consist of cords of synthetic fibres, for example Nylon 6 or Nylon 6.6 or polyester, which, as a result of their elastic modulus and their heat-shrinking properties at high temperatures, attempt to contract and thus to compress the underlying structure with its crossed layers, but are prevented from doing so by the substantial incompressibility of said layers.

Consequently, during vulcanization, the cords have to act at an operating point of their stress-strain diagram corresponding to minimum elongation even when subject to large stresses, and are "fixed" in this condition which provides a powerful encircling effect during the travel of the tyre.

In some tyres, particularly those for trucks, where the weight of the synthetic material required to provide the above results would be excessive, use is made of metallic cords of the high-elongation (HE) type which allow an initial elongation in the vulcanization stage thanks to a spring effect, and then remain fixed in a pre-stress position corresponding to a substantial inextensibility.

However, the belt structure described above, which uses conventional materials, has some drawbacks.

For example, tyres with a 0° layer of the textile type as described above are subjected to what is known as the phenomenon of "flatspotting" which consists in a modification of the geometry of the tyre structure in the footprint area as a result of a prolonged halt of the vehicle, after the latter has travelled over a sufficiently long distance to cause a rise in the tyre temperature. In other words, during the travel of the vehicle, at each rotation, each volume element of the tyre (in other words each unitary portion of the tyre structure extending radially between the outer and inner surfaces of the tyre, including corresponding portions of tread band , belt, carcass ply and liner) remains in the footprint area for the same time and, therefore, the average cyclic deformation at every rotation of each element is the same. However, when the vehicle halts and the tyre cools to ambient temperature, the volume elements located in the footprint area cool down in conditions of lower expansion by comparison with the volume elements outside the footprint area, said fact causing a localized flattening of the rotation surface of the tyre. This means that, at the moment when the vehicle starts to move again, said localized flattening causes said phenomenon of flatspotting, which is manifested for the driver in an annoying slight jolting of the car on each wheel rotation that disappears progressively as the tyre heats up and all the volume elements again take on the same deformation degree. A contribution is also made to the above modification of the tyre geometry by the aforesaid 0° layer because of the modification of the viscoelastic properties and of the geometry of the synthetic fibre conventionally used in the 0° layer of a car tyre. Further details of the phenomenon of flatspotting can be found, for example, in "Mechanics of Pneumatic Tires", U.S. Department of Transportation, Chapter 2, "Tire cord and cord to rubber bonding", editor Samuel K. Clark, 1982 edition, p. 51 ff.

A further disadvantage of the 0° layer of the conventional type arises from the fact that the low values of the shrinkage force and of the elastic modulus of conventional fibres cause an increase in the weight of the 0° layer, and therefore of the whole tyre, since, for the same desired elastic modulus, it is necessary to use a greater number of conventional fibres, and fibres with a higher count (expressed in dTex, i.e. the weight in grams corresponding to 10,000 m of fibre).

High-elongation (HE) metallic cords have a high elastic modulus and allow a considerable elongation at low stress, but entail a complex and expensive manufacturing process which also requires large-scale rubberizing which has a negative effect on the weight of the car tyre which inevitably increases.

The introduction of what are known as run-flat tyres, in other words of the tyres which have to be able to travel for a considerable distance (for example 200 km) even in a deflated condition, is setting increasingly strict criteria for the selection of the materials to be used, for example as a result of the intense overheating of the tyre in run-flat conditions.

Said problem is particularly noticeable in the 0° layer in which the nylon, generally used in conventional tyres, is not suitable for high temperatures. In the aforesaid run-flat tyres, therefore, materials having a high dimensional stability at high temperatures have to be used for the 0° layer. Aramid fibres and rayon have been shown to be suitable materials for this application.

However, said materials have other drawbacks which considerably limit their use. In particular, rayon has a low elastic modulus, and, consequently, for a given desired elastic modulus, the use of rayon increases the count of the fibre and therefore increases the weight of the fabric and of the tyre. Aramid fibres, on the other hand, have problems in respect of adhesion.

Finally, conventional metallic materials, such as what are known as "rigid" polymers, such as the aforesaid aramid fibres, have a high elastic modulus at low deformations. Therefore, during the tyre building stage, their use in the 0° entails a considerable number of problems since they can generate non-uniformities in the vulcanized tyre or, in extreme cases, lead to breakage.

The document FR-1,268,335, in the name of the present Applicant, relates to a tyre provided with at least one layer of natural or synthetic textile threads, said at least one layer being placed between the tread band and the two belt plies with crossed cords. According to said document, said at least one layer has the function of absorbing the deformations and thrusts which said two belt plies transmit towards the tread band . In a particular embodiment, said at least one layer consists of a pair of radially superimposed layers comprising textile threads having a different inclination in each layer, in a similar way to the metallic threads of said two underlying belt plies. In a further embodiment, a single layer of textile threads placed in a longitudinal direction and provided with a slight transverse wave in the plane is provided in a position radially external to said two belt plies.

Document US-5,205,881 discloses a radial tyre having a belt structure formed by two superimposed layers and incorporating reinforcing elements in the form of wave-shaped cords orientated parallel to the equatorial plane in the radially outer layer, and cords parallel to each other and inclined with respect to the equatorial plane in the radially inner layer. The aforesaid belt structure does not have a second layer of cords crossing those of the other layer.

Document US-5,332,017 discloses a radial tyre of reduced weight in which the belt structure is formed by two reinforcing layers provided with single steel wires inclined at 5°-40° with respect to the equatorial plane and by opposing parts in each layer, said single wires being preformed into a spiral shape. No 0° reinforcing layer is provided.

Document EP-043,563 discloses the use of single steel wires in the belt plies for the reinforcing elements which are parallel to each other and inclined in opposite directions, at angles in the range from 10° to 30° with respect to the equatorial plane of the tyre.

Document US-5,225,013 discloses a radial tyre designed to reduce the fatigue rupture of the carcass cords in the proximity of the opposite lateral edges and to improve the cornering stability of the tyre. For this purpose, the tyre has a belt structure having at least one belt ply with reinforcing elements inclined with respect to the equatorial plane, and at least one belt ply with reinforcing elements parallel to the equatorial plane, in other words at 0°, interposed between the carcass and said at least one belt ply with inclined reinforcing elements. No 0° ply is provided between said at least one belt ply with inclined reinforcing elements and the tread band . The reinforcements of the 0° ply are formed by single wires (of steel) bent to form wave shapes.

Document US-5,054,532 discloses a radial tyre with a belt structure formed by two crossed reinforcing layers, in which a reinforcing layer formed by wave-shaped or zig-zag cords or wires is placed between said belt structure and the carcass plies.

Document US-5,271,445 discloses a radial tyre for trucks in which, in order to avoid irregular tyre tread band wear, a belt structure is proposed comprising two belt plies reinforced with steel cords inclined at 45° in each belt ply and on opposite sides in adjacent plies, and two radially outer belt plies reinforced with wave-shaped steel cords having their overall axes parallel to the equatorial plane, in which the ratio between amplitude and length of the waves increases from the centre towards the periphery.

Document JP 10-236108 discloses a tyre in which, in order to improve steering stability, abrasion resistance and durability with the elongation of a product suitably maintained, a reinforcement is formed out of a wire rod having at least an outermost layer of strength equal to or above a specific value, the outermost layer is corrugated so as to have a plurality of different percentage crimp, and the outermost layer is caused to have a specific percentage elongation upon a breakage. In this way, a belt structure is obtained including a pair of belt plies each comprising reinforcements made of a wire rod corrugated so as to continuously have two-dimensional corrugations alternately at every prescribed length within the same plane, without any overlap of large and small corrugations.

Document EP 0 425 318 discloses a pneumatic radial tire comprising a radial carcass comprised of at least one toroidal carcass ply, a belt composed of at least one belt layer arranged outside the carcass ply in the radial direction and a reinforcing layer composed of at least one reinforcing ply and arranged outside the carcass ply in the radial direction According to this reference, in order to provide a good uniformity in spite of the presence of the reinforcing layer and to effectively prevent the expansion at both ends in widthwise direction on the tread, the reinforcing ply is constituted bv spirally winding a strip band obtained by covering at least one wavy bent reinforcing element with a covering material of a high molecular weight substance having a low modulus of elasticity.

Document EP 0 573 237 discloses a pneumatic radial tire for construction vehicles comprising a radial carcass of a single ply containing steel cords, a belt comprised of at least two belt layers each containing steel cords, and a tread arranged outside the belt, in which a reinforcing layer is disposed between the radial carcass and the belt and a protection layer is disposed between the belt and the tread. According to this reference, in order to provide a pneumatic radial tire for construction vehicles having a more improved resistance to cut penetration, while maintaining or improving the separation resistance at the end of the belt layer, each of the reinforcing layer and the protection layer includes reinforcing elements of steel cord or steel filament extending in a circumferential direction of the tire and having wavy or zigzag form of given period and amplitude. The wavelength λ₁ and amplitude A1 of each reinforcing element in the reinforcing laver and the wavelength λ₂ and amplitude A2 of each reinforcing element in the protection laver satisfy the following relationships:
A1/λ₁ < A2/λ₂
A1/λ₁ ≤ 0.08
A2/λ₂ ≥ 0.10.

Document JP 10-044713 discloses a pneumatic radial-ply tyre in which, in order to improve the trail wandering resistance a belt structure is proposed comprising edge cover layers of steel wire arranged at the axially outer ends of a radially outer belt ply as a means to control the rise of these axially outer edges of the belt plies by the centrifugal force, the steel wires of the edge cover layers bein formed in corrugated or spiral shape in a longitudinal direction and individually wound in spiral shape so as to be arranged parallel to the circumferential direction. In this way, at the time of vulcanization the single steel wires individually wound in spiral shape may follow the lift at the axially outer edges of the radially outer ply of the belt so as to take a rectilinear configuration

In a first aspect, the present invention provides a belt structure, of simple construction and low weight, which can provide a radial expansion that allows optimal moulding of the green tyre while ensuring characteristics of substantial circumferential inextensibility of the vulcanized tyre even during travel at high speeds, while also overcoming the aforesaid drawbacks of the known art.

In a different aspect, the present invention relates to a belt structure and to a finished (in other words, vulcanized) tyre which is not subjected to the troublesome phenomenon of flat-spotting, or which is at least capable of eliminating it rapidly.

In another aspect, the present invention relates to a belt structure which is particularly resistant to the forces generated by the cornering of the vehicle at the edges of said structure.

In particular, in the portion of the belt structure located on the extrados of a curvilinear path set by the vehicle, the state of tensile stress increases with respect to the situation of the tyre running along a straight path, while said stress state decreases on the portion located at the intrados of said curvilinear path, and can even cause said portion to operate in conditions of compression.

The Applicant has found that said results can advantageously be achieved in a tyre whose belt structure incorporates a ply comprising, as reinforcing elements, preformed single metal wires placed parallel to the equatorial plane of the tyre, in other words at 0°.

Preferably, the aforesaid belt ply is placed in a position radially external to said belt structure.

According to the present invention, the use of preformed single wires in the 0° belt structure enables the single wires which operate in conditions of compression not to suffer from breakage due to point stresses.

For the purposes of the present description, the term "preforming" denotes a deformation of the plastic type obtained by any method of the known art. In other words, the term "preforming" is used here to denote the plastic deformation undergone by a given element (a single metal wire in this specific case) under the effect of a deforming action applied to said element: trace and memory of said deformation remain in said element even after the deformation has been substantially eliminated with the restoration of the configuration possessed by said element before the application of said deforming action.

For the purposes of the present description, the term "preformed single wire" denotes a single wire deformed in a plastic way according to any method known in the art.

Additionally, for the purposes of the present description, the term "preforming ratio" denotes the ratio L₁/L₀, where L₁ is the distance between the opposite ends of a length of single wire in the deformed condition and Lo is the distance between the opposite ends of the same length of single wire in the non-deformed condition.

Preferably, said preforming ratio relates to the single wire prepared for use in the green tyre, in other words before it is subjected to the stage of moulding and vulcanization of the tyre.

Preferably, the single wire in the non-deformed condition has a rectilinear configuration.

Therefore, the present invention relates to a tyre for motor vehicles with an improved belt structure as defined in attached claim 1.

Preferably, the value of preforming ratio of an initial preforming of the single metal wives is not less than 0.90.

More preferably, said preforming ratio is in the range from 0.90 to 0.98.

Advantageously, tyres of different sizes use single wires with the same preforming ratio. However, a person skilled in the art will be able to establish a specific preforming ratio for each tyre size if necessary.

As is known, the green tyre, after building, is subjected to a stage of moulding during which the reinforcing elements of said 0° layer undergo a stretching action produced by the pressurized fluid used in said stage.

The Applicant has found that the aforesaid preforming ratio has to be such that, during the moulding stage, the aforesaid reinforcing elements are stretched by an amount less than or equal to the contraction undergone by said elements due to said preforming. In other words, the stretching action imparted during said moulding stage to the single metal wires preformed according to the invention comprises an elongation of said preformed single wires which has to be smaller than, or not more than equal to, the contraction undergone by said single wires during the preforming stage, said contraction being equal to the difference (L₀ - L₁).

Therefore, in a further aspect the present invention relates to a method for producing a tyre as defined in attached claim 17.

Preferably, the method includes a step of applying a reinforcing layer radially external to said at least one pair of belt plies, which step is a spiral winding operation.

Said single wires can maintain a certain residual preforming in the vulcanized tyre, following to the stretching action undergone by the single wires during the moulding stage.

For the purposes of the present description, the term "residual preforming" denotes the preforming present in the aforesaid single wires after the stage of moulding and vulcanizing the tyre. In other words, the residual preforming denotes the preforming retained by said single wires in the finished tyre.

Furthermore, for the purposes of the present description, the term "residual preforming ratio" denotes the preforming ratio as defined above with reference to the finished tyre.

Preferably, said residual preforming is less than the initial preforming imparted to the original straight single wire.

Therefore, in a similar way to that described above, it is possible to define a residual preforming ratio which quantifies the amount of preforming which is still retained by the single wires in the vulcanized tyre.

Preferably, said single metal wires have a residual preforming ratio of not less than 0.95.

More preferably, said single metal wires have a residual preforming ratio in the range from 0.95 to 1.

Preferably, said residual preforming ratio is the result of an initial preforming of the single wire according to a preforming ratio in the range from 0.90 to 0.98 and a subsequent stretching of the single wire, particularly during the moulding of the green tyre, by an amount less than or at most equal to the contraction undergone by said single metal wire during the initial preforming.

As mentioned above, a tyre incorporating a belt structure according to the invention enables the phenomenon of flatspotting to be significantly reduced.

The Applicant considers that said reduction can be particularly significant above all in the case in which the single wires of the belt structure according to the invention have a given residual preforming. This is because, in this case, the residual preforming of said single wires of the 0° layer enables the tyre to recover more rapidly from the localized deformation (flattening) undergone under the footprint area during the period for which the vehicle is stationary.

Additionally, if the tyre is designed to meet run-flat requirements, the belt structure according to the invention enables the tyre to increase the distance travelled in conditions of essential deflation, provided that all other conditions are kept constant, since said structure has a high resistance to the overheating to which said tyre is subjected during flat running.

Additionally, the belt structure according to the present invention, comprising reinforcing elements of the metallic type, is suitable for X-ray analysis for the purpose of checking the state of deterioration of said structure. For example, if the tyre has travelled over a long distance in conditions of substantial deflation, said X-ray analysis makes it possible to determine whether the belt structure has been irremediably damaged or whether the tyre can advantageously be re-used in a safe way.

Moreover, the belt structure according to the present invention provides an improved puncture resistance since the presence of a belt layer comprising single metal wires contributes to an increase in the total area of the crown portion of the tyre covered with metal, thus providing a greater mechanical resistance to the penetration of blunt objects, by comparison with a belt structure of the known type which comprises a 0° reinforcing layer of the textile type; the possibility of a blunt object being able to penetrate into the carcass structure and thereby puncturing the tyre is thus reduced.

Preferably, said single metal wires are made from steel.

According to further embodiments of the invention, said single metal wires are made from aluminium or metal alloys, preferably aluminium alloys.

In a preferred embodiment of the invention, said preformed single wires have a diameter in the range from 0.10 to 0.40 mm.

According to a preferred embodiment, the deformations of the single wire are in one plane (in other words, they are coplanar).

According to a further preferred embodiment, said deformations consist of substantially sinusoidal wave shapes. Preferably, said sinusoidal wave shapes have a wavelength in the range from 3 mm to 9 mm. Preferably, said sinusoidal wave shapes have an amplitude in the range from 0.3 mm to 1.5 mm. The above ranges of wavelength and amplitude are preferably measured directly on the single wire before it is rubberized and before it is inserted into the tyre; advantageously, in the vulcanized tyre, said values can be measured, by means of a manifying lens and a graduated scale (a ruler, for example), on the single wire which is exposed by removal of the tread band and, if necessary, also on the single wire extracted from the tyre and cleaned to remove the rubber by means of suitable solvents.

According to a further embodiment, said single wires are substantially equally distributed; in other words, the axial spacing between consecutive adjacent single wires is substantially constant.

According to a different form of embodiment, the value of the residual preforming of said single wires increases in an axial direction towards the edges of said reinforcing layer.

In a preferred embodiment of the method of the present invention the steps of moulding and vulcanizing the tyre , are carried out in a condition in which said single metal wires are stretched in such a way that the initial preforming of said single metal wires is cancelled in a central portion of said reinforcing layer, lying across the equatorial plane of said tyre, and that a residual preforming is left in said single metal wires in two lateral edge portions of said reinforcing layer.

As will be made clearer by the examples described in the following of the present description, the Applicant has also found that the preforming undergone by the single metal reinforcing wires according to the invention remains visible and clearly identifiable, even in the finished tyre.

Preferably, said initial preforming is cancelled during the step of moulding and vulcanizing said tyre.

Preferably, said traces are represented by the internal strains, particularly residual internal strains, possessed by the crystalline grains of said single metal wires.

Further characteristics and advantages will be made clearer by the detailed description of a preferred, but not exclusive, embodiment of a tyre for motor vehicles with an improved belt structure according to the invention.

This description is provided below with reference to the attached drawings, provided for guidance only and without restrictive intent, in which:
- Figure 1 is a partial perspective view of a tyre made in accordance with the present invention;
- Figure 2 shows an embodiment of a deformed single wire for use in a reinforcing layer of a belt structure according to the present invention;
- Figure 3 is a schematic cross section of a reinforcing layer according to the present invention;
- Figure 4 is a schematic cross section of a reinforcing layer according to the known art;
- Figure 5 is a stress-strain diagram in which a conventional material and two single wires according to the invention are compared;
- Figure 6 is a stress-strain diagram in which a non-wave-shaped single wire and two wave-shaped single wires according to the invention are compared;
- Figure 7 shows a central portion, in the equatorial plane of a vulcanized tyre, seen in plan view from above, of the 0° layer of preformed single wires, exposed by removal of the corresponding portion of tread band and
- Figure 8 shows an edge portion, at the shoulder of a vulcanized tyre, seen in plan view from above, of the 0° layer of preformed single wires, exposed by removal of the corresponding portion of tread band.

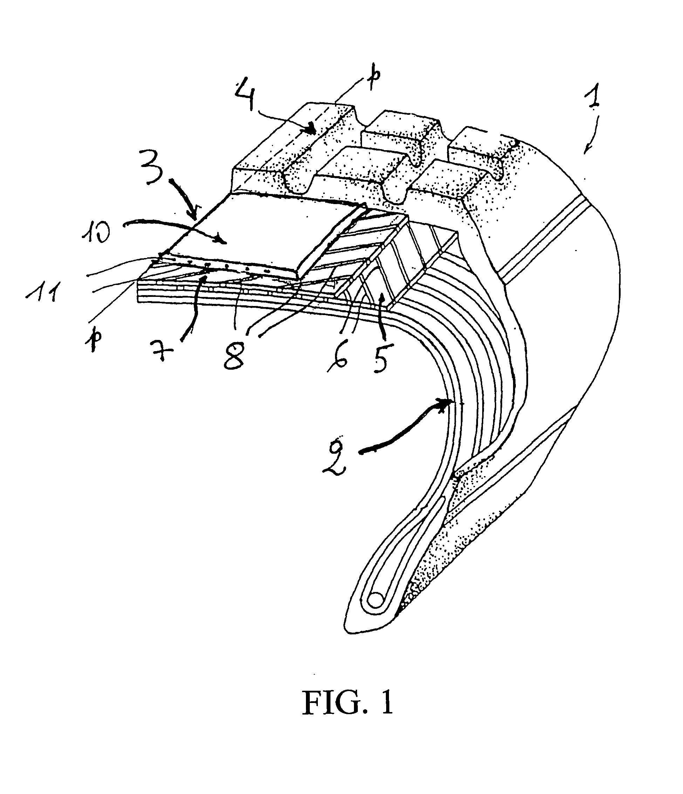

With reference to Figure 1, reference sign 1 indicates in a general way a tyre for motor vehicles with an improved belt structure according to the present invention.

The tyre 1 comprises, in a known way, a carcass structure 2 having one or more carcass plies, each consisting of cords (shown schematically) consecutively adjacent to each other and placed in substantially radial planes containing the rotation axis of the tyre.

A belt structure, indicated in a general way by 3, is applied circumferentially around the carcass structure 2, in a centred position with respect to the equatorial plane p-p of the tyre, and a tread band 4 is placed in a position radially external to the belt structure.

In Figure 1, the tread band 4 of the tyre 1 has, on its outer rolling surface, a relief tread pattern comprising, in a known way, a plurality of circumferential and transverse recesses and grooves. However, the present invention is also advantageously applicable to tyres whose tread band has a different relief pattern, or has no pattern at all (slick tyres).

The belt structure 3 has at least a first belt ply 5 in a position radially external to the carcass 2, a second belt ply 7 placed in a position radially external to said first ply 5, and a reinforcing layer 10 in a position radially external to said second ply 7. For greater clarity of illustration, the plies 5, 7 and the reinforcing layer 10 are represented with progressively decreasing widths, but this is not to be interpreted in a restrictive way.

The first belt ply 5 and the second belt ply 7 comprise metal cords, adjacent to each other and orientated obliquely with respect to the equatorial plane p-p of the tyre, at an angle in the range from 10° to 30°. Moreover, the cords of the second belt ply 7 are inclined in the opposite direction with respect to the cords of the first belt ply 5. The reinforcing elements 11 of the reinforcing layer 10 are substantially parallel to each other and orientated in a direction substantially parallel to the equatorial plane p-p of the tyre. Preferably, in the axial direction said reinforcing elements 11 are equally spaced from each other within said layer 10.

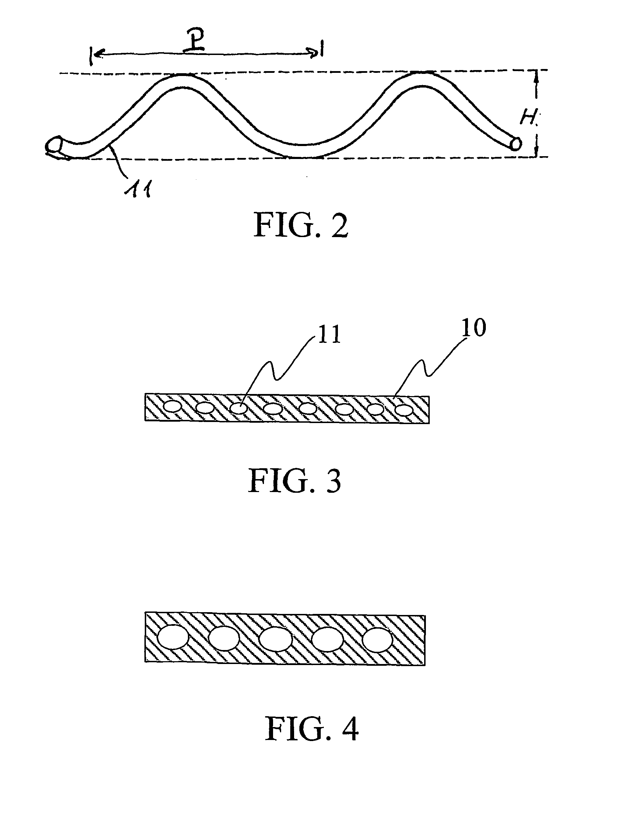

According to a preferred embodiment of the present invention, said reinforcing elements 11 are preformed single steel wires, for example of the type shown in Figure 2.

More preferably, said single wires are coated with brass.

Preferably, each of said single wires has a diameter in the range from 0.10 to 0.40 mm.

According to the present invention, said reinforcing elements 1 are preformed in such a way that they take on a wave-shaped or zig-zag configuration.

Preferably, said reinforcing elements are preformed in such a way that they take on a wave-shaped configuration, since this type of preforming allows to obtain preformed reinforcing elements which are substantially free of discontinuities in curvature along their longitudinal extension. Said characteristic is particularly advantageous, in that the presence of said discontinuities (for example, sharp corners) reduces the breaking stress of said reinforcing elements.

As mentioned above, said reinforcing elements 11 are preferably preformed with a preforming ratio of not less than 0.90. More preferably, said preforming ratio is advantageously within the range from 0.90 to 0.98.

Preferably, the deformations of the single wire are coplanar: in other words, the deformed single wire lies in one plane; however, other configurations of the deformation are possible, such as a configuration of the helical type.

In order to obtain a preformed single metal wire according to the present invention, use can be made of any method known in the art. For example, it is possible to use toothed wheel devices of the type shown in US-5,581,990, or the device described in the Patent Application WO 00/39385, in the name of the present Applicant. Said device comprises a pair of pulleys, each having a plurality of opposing pins which interpenetrate along a predetermined length in such a way as to cause an axial deformation and a bending deformation simultaneously in a wire which is made to pass through the space between the pins of the first pulley and the corresponding pins of the second pulley. The aforesaid interpenetration can be produced as a result of the movement of the aforesaid pair of pulleys which are caused to rotate by the wire itself.

The single wires incorporated in the 0° reinforcing layer according to the invention provide a considerable elongation at low stress, which is necessary during the moulding step of the tyre in which, as mentioned above, said single wires are stretched by an amount less than, or at the most equal to, the preforming contraction, and also provide a high elastic modulus during the normal operating conditions of the tyre.

Said reinforcing layer 10 according to the present invention can be produced by spirally winding a strip containing preferably from 3 to 15, or even more preferably 10, wave-shaped single wires.

Preferably, the width of said strip is in the range from 5 to 30 mm.

Preferably, the density of the 0° layer is in the range from 45 to 150 single wires per decimetre.

Preferably, in the tyre building step, during the aforesaid spiral winding, said strip is subjected to a stretching action in the range from 2 to 3%.

In a preferred embodiment, said strip comprises 10 single wires with a diameter of 0.20 mm each, has a width of 12.7 mm and has a density of 80 wires per decimetre.

Preferably, the diameter of each single wire according to the present invention is in the range from 0.15 mm to 0.30 mm, said small-diameter single wires having the following advantages:
- they enable the weight of the reinforcing layer to be reduced, not only because the diameter is limited, but also because said choice requires a lower consumption of rubber for coating the single wires;
- they provide good fatigue resistance.

If the breaking stress is to be increased as much as possible, then in place of a standard NT (normal tensile) steel with a breaking stress in MPa (megapascal) of the order of 3,350-(2,000*d) (where d is the diameter in mm) use can be made of high-carbon steels such as HT (high tensile) steels with a breaking stress in MPa of the order of 3,750-(2,000*d), SHT (super high tensile) steels having a breaking stress in MPa of the order of 4,080-(2,000*d), or UHT (ultra high tensile) steels having a breaking stress in MPa of the order of 4,400-(2,000*d). Said values of breaking stress depend, in particular, on the quantity of carbon contained in the steel.

Furthermore, if protection against corrosion has to be provided, the brass coating mentioned above can advantageously be replaced with a corrosion proofing coating, based on zinc, zinc-manganese (ZnMn) alloys or zinc-cobalt (ZnCo) alloys.

In the embodiment shown in Figure 3, the 0° reinforcing layer according to the invention comprises a strip of rubberized fabric with a thickness of 0.45 mm in which are incorporated or embedded wave-shaped single wires (of the type shown in Figure 2, for example) with diameters of 0.15 mm and a spacing (or distance) of 1.5 mm between the axes of two consecutive adjacent wires.

Preferably, said spacing is substantially constant over the whole width of the reinforcing layer. However, it should be noted that, during the moulding step, the single wires of said reinforcing layer undergo an elongation which can cause a variation of said spacing and, therefore, of the density of said elements within said reinforcing layer.

For comparison, Figure 4 shows the structure of a 0° reinforcing layer according to the known art, made from nylon cords with diameters of 0.39 mm, embedded in a rubberized fabric having a thickness of 0.70 mm.

Therefore, a comparison between the aforesaid Figures 3 and 4 demonstrates, although in a qualitative way since said figures are not to the same scale, the saving of weight which, as mentioned above, is one of the advantages of the present invention.

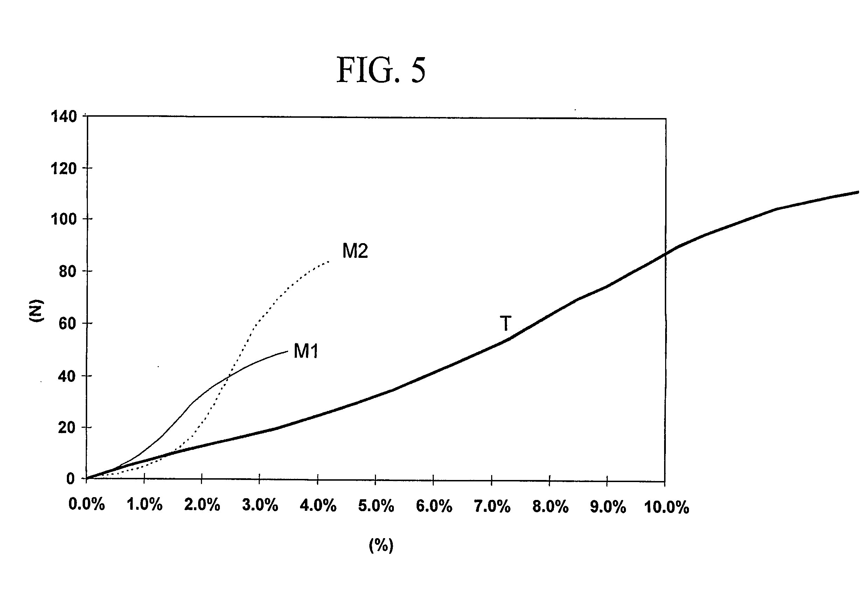

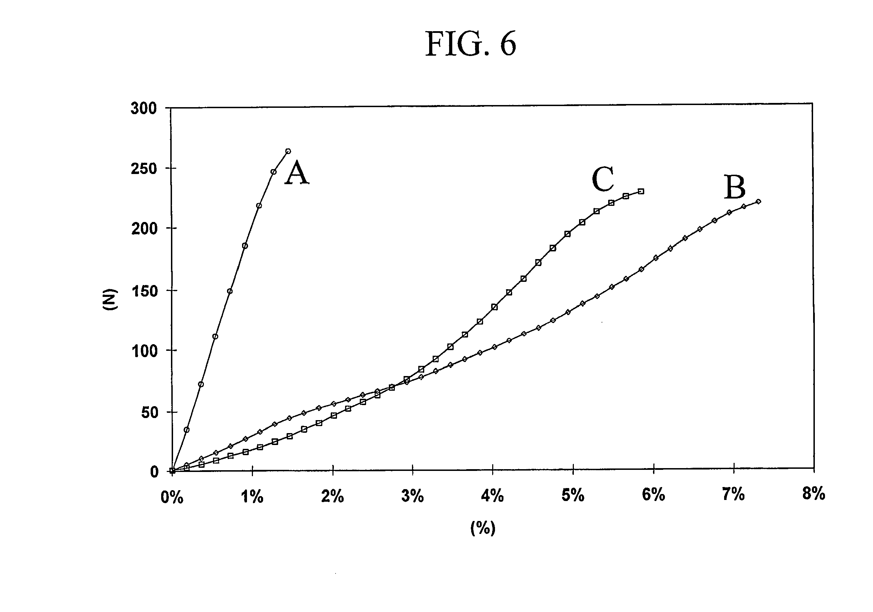

Figures 5 and 6 show two stress-strain diagrams illustrating the advantages of the invention. In both diagrams, the horizontal axes show the deformations (expressed as a percentage) and the vertical axes show the stresses (expressed in Newton).

In greater detail, Figure 5 shows the stress-strain diagrams for a conventional material T, particularly a nylon cord of 1400*1 dTex subjected to 150 twists per metre, and for two single wires M1 and M2, of which a) the single wire M1 is made from NT steel, has a diameter of 0.15 mm and has a sinusoidal shape in one plane with a wavelength P of 8.0 mm and a wave amplitude H equal to 0.9 mm; b) the single wire M2 is made from NT steel, has a diameter of 0.20 mm and has a sinusoidal shape in one plane with a wavelength P of 6.9 mm and a wave amplitude H equal to 0.8 mm.

An analysis of said diagram of Figure 5 shows that, for low values of stress, the single wire M2 has a deformation substantially equal to that of the nylon T, while the deformation of the single wire M1 is greater. For progressively increasing values of stress, the deformation of the single wires M1 and M2 is lower than that of T; in other words, both of the single wires are much more rigid than the nylon T.

Figure 6 shows a stress-strain diagram in which three single wires A, B, C made from NT steel, with diameters of 0.35 mm each, are compared with each other. In greater detail, the single wire A has a rectilinear axis, the single wire B has been deformed to take on a sinusoidal shape in one plane with a wavelength P of 8.0 mm and a wave amplitude H equal to 1.3 mm, and the single wire C has been deformed to take on a sinusoidal shape in one plane with a wavelength P of 5.7 mm and a wave amplitude H equal to 1.1 mm.

An analysis of said diagram shows that the rectilinear single wire A requires very high values of stress to undergo deformations of 1%-2%. This makes said single wire unsuitable for making the 0° layer of a tyre which has to be moulded and vulcanized. On the other hand, the single wires B and C show consistent deformations, which can reach 3%-4%, even at low values of stress. It can be noted that, for values of deformation above 3%-4%, the deformation increases only if the applied stress is considerably increased.

The Applicant has also conducted some tests directly on the tyre provided with a belt structure according to the present invention.

### Example 1

A set of tyres according to the invention and a set of comparative tyres were used, all of the 185/50 R 14 size, with an inflation pressure of 2.2 bar for the front axle of the vehicle and 2.0 bar for the rear axle. A Skoda Fabia 1.4 16V car was first fitted with four tyres according to the invention and then with four comparative tyres. The comparative tyres and the tyres according to the invention all had substantially the same structure and the same tread pattern, the only difference between them being the reinforcing layer in a position radially external to the belt structure.

The tyres according to the invention had a reinforcing layer obtained by spirally winding onto the crown of the belt a strip having a thickness of 0.80 mm, a width of 12.7 mm, density of the single wires of 80 wires per decimetre, a single wire diameter of 0.2 mm, with HT steel single wires preformed to take on a sinusoidal shape in one plane with a wavelength P of 5.3 mm and a wave amplitude H equal to 0.6 mm. The comparative tyres, on the contrary, had a reinforcing layer formed from a strip comprising 1,400*1 dTex nylon cords (the thread obtained from the floss was subjected to 150 twists per metre - the symbol "*1" above indicates that the cord was formed from a single thread), said strip having a density of 110 cords per decimetre.

Tests of running behaviour were carried out on both dry and wet road surfaces, together with comfort tests.

The test of running behaviour, in dry and wet surface conditions, was carried out on a circuit closed to traffic (the Nurburgring circuit) by carrying out certain characteristic manoeuvres (such as lane changing, overtaking, slalom driving between cones, and entering and leaving bends). Said manoeuvres were carried out at constant speed, and also in acceleration and deceleration, and the test driver evaluated the performance of the tyre by assigning a numeric evaluation of the tyre behaviour during the above manoeuvres.

The assessment scale used represented a subjective assessment expressed by the test driver who tested in succession the fittings which were compared.

Comfort was evaluated on the basis of the set of sensations experienced by the test driver with respect to the tyre capacity for absorbing the roughness of the road surface. Said comfort tests were carried out in the conditions specified by the RE01 Standard.

The results of the tests are shown in Table I, where the values of the assessments are expressed as percentages, with the values relative to the set of comparative tyres being fixed to 100.

**Table I**

| | Comparative tyre | Tyre according to the invention |
|---|---|---|
| Straight running | 100 | 120 |
| Soft handling | 100 | 115 |
| Hard handling | 100 | 115 |
| Comfort | 100 | 105 |
| Running on wet surface | 100 | 120 |

In Table I, values above 100 indicate an improvement with respect to the comparative tyre.

### Example 2

In a similar way to that described in Example 1, a set of tyres of the 195/65 R 15 size was used, with an inflation pressure of 1.9 bar, fitted on a Volkswagen Golf 1.6 car.

Also in this case, results similar to those of Example 1 were obtained demonstrating that the behaviour of the tyres according to the invention was markedly better than that of the comparative tyres.

Furthermore, the Applicant has verified that the preforming undergone by the single metal reinforcing wires according to the invention remains visible and clearly identifiable even in the finished tyre.

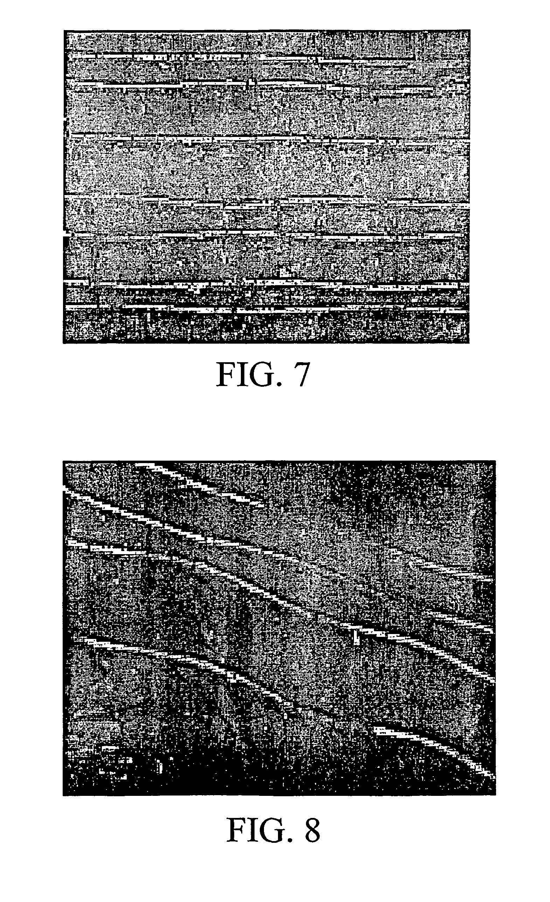

In particular, a tyre according to the invention as described in Example 1 was analysed by removing the tread band by scraping until the 0° reinforcing layer was brought to the surface, as shown in Figures 7 and 8.

A visual analysis revealed that the presence of a residual preforming of the single metal wires used in the aforesaid reinforcing layer was perceptible, even to the naked eye. In the case of the sinusoidal type of preforming of Example 1, the pitch and amplitude of said preforming was measured by means of a magnifying lens and a graduated ruler.

It should be emphasized that, when the residual preforming and the strain undergone by said single wires during the moulding step are known, it is possible to determine, with a good approximation, the original preforming, in other words the initial preforming which was imparted to the rectilinear single wire.

Moreover, as shown in the aforesaid Figures 7 and 8, the Applicant has found that the residual preforming of the aforesaid single metal wires was lower in the central area of the tyre (in other words, near the equatorial plane of the tyre), while it was more marked in the area of the shoulders of the tyre (in other words, the single wires were stretched more in the centre of the tyre and to a lesser extent on the shoulders of the tyre).

A more accurate evaluation of the preforming can be carried out by extracting, with due care, a single wire from the tyre. For this purpose, the tread band is first removed, after which the rubberized single wires of the 0° reinforcing layer are extracted by means of a sharpened blade, care being taken not to apply tension to the single wire. The vulcanized rubber mixture is removed from the single wire, for example by treatment in dichlorobenzene at 100 °C for 12 hours.

The single wire extracted in this way can be subjected to a visual analysis (according to the above procedure, for example), or to a local analysis by electron microscope and/or X-ray methods in order to determine not only the presence of the preforming, but also, at least in some cases, the type of preforming to which said single wire was subjected.

This is because, as should be emphasized, an accurate analysis of the single wire, even if it shows a configuration of the rectilinear type on the tyre (after removal of the tread band) or after extraction from the tyre, makes it possible to determine whether or not the single wire was subjected to preforming. Said preforming, being a plastic deformation, leaves an indelible trace in the single wire which retains a memory of the treatment which it has undergone. An analysis carried out with known methods and devices (X-ray, metallographic analysis) of the crystal grains of said single wire makes it possible, for example, to check for the presence of internal strains (microstrains) and to determine their extent (on the basis of the shapes and dimensions of the peaks obtained by said analysis). Said residual strains are the indelible signs of the preforming of the single wire which was carried out by a given preforming device. In particular, it is possible to identify the residual tensile and compressive strains since the preforming device, acting on said crystal grains, can cause on them a stretching on the extrados of the preforming curve and a compression on the intrados of said curve.

## Claims

1. Tyre (1) for motor vehicles with an improved belt structure, provided with:
- a carcass structure (2) comprising at least one carcass ply having reinforcing cords orientated substantially in radial planes containing the rotation axis of the tyre;
- a tread band (4) extending circumferentially around said carcass structure (2);
- a belt structure (3), circumferentially interposed between the carcass structure (2) and the tread band (4), comprising at least one pair of belt plies (5, 7) radially superimposed on each other, each ply (5, 7) having a plurality of cords (6, 8) orientated obliquely at an angle in the range from 10° to 30° with respect to the equatorial plane (p-p) of the tyre (1), parallel to each other in each ply and crossing over those of the adjacent ply, and a reinforcing layer (10) radially external to said at least one pair of belt plies (5, 7) and having reinforcing elements (11) substantially parallel to each other and to the aforesaid equatorial plane (p-p), said reinforcing elements (11) comprising substantially rectilinear single metal wires which show traces of an initial preforming made thereon before insertion in the tyre which was subsequently partially or totally cancelled;
**characterized in that** said reinforcing layer (10) extends across the equatorial plane of the tyre (1).

2. Tyre (1) according to Claim 1, in which said substantially rectilinear single metal wires have residual preforming deformations.

3. Tyre (1) according to Claim 2, in which said single metal wires have a residual preforming ratio in the range from 0.95 to 1.

4. Tyre (1) according to Claim 1, in which said single metal wires are selected from the group comprising: steel, aluminium and metal alloys.

5. Tyre (1) according to Claim 4, in which said metal alloys are aluminium alloys.

6. Tyre (1) according to Claim 4, in which said single steel wires have a coating selected from the group comprising: brass, zinc, zinc-manganese alloys, and zinc-cobalt alloys.

7. Tyre (1) according to Claim 1, in which said single metal wires have a diameter in the range from 0.10 mm to 0.40 mm.

8. Tyre (1) according to Claim 1, in which the deformations of said single wires are coplanar.

9. Tyre (1) according to Claim 1, in which the deformations of said single wires consist of substantially sinusoidal wave shapes.

10. Tyre (1) according to Claim 9, in which said substantially sinusoidal deformations have a wavelength (P) in the range from 3 mm to 9 mm.

11. Tyre (1) according to Claim 9, in which said substantially sinusoidal deformations have an amplitude (H) in the range from 0.3 mm to 1.5 mm.

12. Tyre (1) according to Claim 1, in which said single metal wires are distributed in said reinforcing layer (10) with a constant axial spacing between them.

13. Tyre (1) according to Claim 1 or 2, in which said substantially rectilinear single metal wires have residual preforming deformations increasing in an axial direction towards the edges of said reinforcing layer (10).

14. Tyre (1) according to Claim 1, in which said traces comprise internal strains possessed by the crystal grains of said single metal wires.

15. Tyre (1) according to Claim 1, in which the value of the preforming ratio (L₁/L₀) of said initial preforming of the single metal wires before insertion in the tyre is not less than 0.90.

16. Tyre (1) according to Claim 15, in which said value of the preforming ratio (L₁/L₀) of said initial preforming of the single metal wires before insertion in the tyre is in the range from 0.90 to 0.98.

17. Method for producing a tyre (1), comprising the steps of:
making a carcass structure (2);
applying a belt structure (3) in a position circumferentially external to said carcass structure (2), said belt structure (3) comprising at least one pair of belt plies (5, 7) radially superimposed on each other, each ply (5, 7) having a plurality of cords (6, 8) orientated obliquely at an angle in the range from 10° to 30° with respect to the equatorial plane (p-p) of the tyre (1), parallel to each other in each ply and crossing over those of the adjacent ply, and a reinforcing layer (10) radially external to said at least one pair of belt plies (5, 7), and having single metal wires (11) substantially parallel to each other and to the equatorial plane (p-p) of said tyre (1), said single metal wires (11) being applied in a condition in which they are preformed according to a certain initial preforming ratio;
applying a tread band (4) in a position circumferentially external to said belt structure (3);
applying to said carcass structure (2) at least one pair of sidewalls in laterally opposing positions;
moulding and vulcanizing the tyre (1) produced in this way;
stretching said single metal wires (11) during said moulding step by an amount not exceeding the preforming contraction undergone by said single metal wires (11) so as to obtain substantially rectilinear single metal wires (11) which show traces of said initial preforming which was subsequently partially or totally cancelled;
**characterized in that** said reinforcing layer (10) of the belt structure (3) extends across the equatorial plane of the tyre (1).

18. Method according to Claim 17, in which said step of applying a reinforcing layer (10) radially external to said at least one pair of belt plies (5, 7) is a spirally winding operation.

19. Method according to Claim 17, in which said substantially rectilinear single metal wires have residual preforming deformations.

20. Method according to Claim 17 or 19, in which said steps of moulding and vulcanizing the tyre (1) are carried out in a condition in which said single metal wires are stretched in such a way that the initial preforming of said single metal wires is cancelled in a central portion of said reinforcing layer (10), lying across the equatorial plane of said tyre, and that a residual preforming is left in said single metal wires in two lateral edge portions of said reinforcing layer (10).

## Patentansprüche

1. Reifen (1) für Motorfahrzeuge mit einer verbesserten Gürtelstruktur, der vorgesehen ist mit:
einer Karkassenstruktur (2), welche wenigstens eine Karkassenlage umfasst, die Verstärkungskorde aufweist, die im Wesentlichen in radialen Ebenen ausgerichtet sind, welche die Drehachse des Reifens enthält;
einem Laufflächenband (4), das sich um die Karkassenstruktur (2) in Umfangsrichtung erstreckt;
einer Gürtelstruktur (3), welche zwischen der Karkassenstruktur (2) und dem Laufflächenband (4) vorgesehen ist, welche wenigstens ein Paar von Gürtellagen (5, 7), die radial übereinander liegen, wobei jede Lage (5, 7) eine Mehrzahl von Korden (6, 8) aufweist, die in einem Winkel im Bereich von 10° bis 30° bezüglich der Äquatorebene (p-p) des Reifens (1) schräg ausgerichtet sind, parallel zueinander in jeder Lage und quer zu denen der benachbarten Lage, und eine Verstärkungsschicht (10) umfasst, welche bezüglich des wenigstens einen Paars von Gürtellagen (5, 7) radial außen vorgesehen ist und Verstärkungselemente (11) aufweist, welche im Wesentlichen parallel zueinander und zur vorgenannten Äquatorebene (p-p) sind, wobei die Verstärkungselemente (11) im Wesentlichen geradlinige einzelne Metalldrähte umfassen, welche Spuren eines initialen Vorformens aufweisen, die vor dem Einbringen in den Reifen daran ausgebildet wurden, die danach teilweise oder vollständig entfernt wurden;
**dadurch gekennzeichnet, dass** die Verstärkungsschicht (10) sich über die Äquatorebene des Reifens (1) erstreckt.

2. Reifen (1) nach Anspruch 1, bei dem die im Wesentlichen geradlinigen einzelnen Metalldrähte Restverformungen des Vorformens aufweisen.

3. Reifen (1) nach Anspruch 2, in dem die einzelnen Metalldrähte ein Restvorformverhaltnis im Bereich von 0,95 bis 1 aufweisen.

4. Reifen (1) nach Anspruch 1, in dem die einzelnen Metalldrähte aus der Gruppe ausgewählt sind, welche Stahl, Aluminium und Metalllegierungen umfasst.

5. Reifen nach Anspruch 4, bei dem die Metalllegierungen Aluminiumlegierungen sind.

6. Reifen (1) nach Anspruch 4, bei dem die einzelnen Stahldrähte eine Beschichtung aufweisen, welche aus der Gruppe ausgewählt ist, die Messing, Zink, Zink-Mangan-Legierungen und Zink-Cobalt-Legierungen umfasst.

7. Reifen (1) nach Anspruch 1, bei dem die einzelnen Metalldrähte einen Durchmesser im Bereich von 0,10 mm bis 0,40 mm aufweisen.

8. Reifen (1) nach Anspruch 1, bei dem die Verformungen der einzelnen Drähte coplanar sind.

9. Reifen (1) nach Anspruch 1, bei dem die Verformungen der einzelnen Drähte aus im Wesentlichen sinusförmigen Wellenformen bestehen.

10. Reifen (1) nach Anspruch 9, bei dem die im Wesentlichen sinusförmigen Verformungen eine Wellenlänge (P) im Bereich von 3 mm bis 9 mm aufweisen.

11. Reifen (1) nach Anspruch 9, bei dem die im Wesentlichen sinusförmigen Verformungen eine Amplitude (H) im Bereich von 0,3 mm bis 1,5 mm aufweisen.

12. Reifen (1) nach Anspruch 1, bei dem die einzelnen Metalldrähte in der Verstärkungsschicht (10) mit einem konstanten axialen Abstand dazwischen verlegt sind.

13. Reifen (1) nach Anspruch 1 oder 2, bei dem die im Wesentlichen geradlinigen einzelnen Metalldrähte Restverformungen des Vorformens aufweisen, die sich in der axialen Richtung zu den Rändern der Verstärkungsschicht (10) vergrößern.

14. Reifen (1) nach Anspruch 1, bei dem die Spuren interne Spannungen umfassen, die von den Kristallkörnern der einzelnen Metalldrähte herrühren.

15. Reifen (1) nach Anspruch 1, bei dem der Wert des Vorformverhältnisses (L₁/L₀) des initialen Vorformens der einzelnen Metalldrähte vor dem Einbringen in den Reifen nicht kleiner als 0,90 ist.

16. Reifen (1) nach Anspruch 15, bei dem der Wert des Vorformverhältnisses (L₁/L₀) des initialen Vorformens der einzelnen Metalldrähte vor dem Einbringen in den Reifen sich im Bereich von 0,09 bis 0,98 befindet.

17. Verfahren zur Herstellung eines Reifens (1), das die Schritte umfasst:
Herstellen einer Karkassenstruktur (2);
Aufbringen einer Gürtelstruktur (3) an einer Position, welche bezüglich des Umfangs zur Karkassenstruktur (2) außen ist, wobei die Gürtelstruktur (3) wenigstens ein Paar von Gürtellagen (5, 7), die radial übereinander liegen, wobei jede Lage (5, 7) eine Mehrzahl von Korden (6, 8) aufweist, die in einem Winkel im Bereich von 10° bis 30° bezüglich der Äquatorebene (P-P) des Reifens (1) schräg ausgerichtet sind, parallel zueinander in jeder Lage und quer zu denen der benachbarten Lage, und eine Verstärkungsschicht (10) umfasst, welche bezüglich des wenigstens einen Paars von Gürtellagen (5, 7) radial außen ist und einzelne Metalldrähte (11) aufweist, die im Wesentlichen parallel zueinander und zur Äquatorebene (p-p) des Reifens (1) sind, wobei die einzelnen Metalldrähte (11) in einem Zustand eingebracht werden, in dem diese gemäß einem bestimmten initialen Vorformverhältnis vorgeformt sind;
Aufbringen eines Laufflächenbands (4) an einer Position, die in Umfangsrichtung zur Gürtelstruktur (3) außen ist;
Aufbringen der Karkassenstruktur (2) auf wenigstens einem Paar von Seitenwänden in lateral gegenüberliegenden Positionen;
Ausformen und Vulkanisieren des Reifens (1), der auf diese Weise hergestellt ist;
Dehnen der einzelnen Metalldrähte (11) während des Ausformungsschritts um einen Betrag, der das Zusammenziehen beim Vorformen, dem die einzelnen Metalldrähte (11) ausgesetzt waren, nicht übersteigt, um im Wesentlichen geradlinige einzelne Metalldrähte (11) zu erhalten, welche Spuren des initialen Vorformens zeigen, die danach teilweise oder vollständig aufgehoben wurden;
**dadurch gekennzeichnet, dass** die Verstärkungsschicht (10) der Gürtelstruktur (3) sich über die Äquatorebene des Reifens (1) erstreckt.

18. Verfahren nach Anspruch 17, in dem der Schritt des Aufbringens einer Verstärkungsschicht (10) radial außen bezüglich des wenigstens einen Paars von Gürtelschichten (5, 7) ein Spiralwicklungsablauf ist.

19. Reifen (1) nach Anspruch 17, bei dem die im Wesentlichen geradlinigen einzelnen Metalldrähte Restverformungen des Vorausformens aufweisen.

20. Verfahren nach Anspruch 17 oder 19, bei dem die Schritte des Ausformens und Vulkanisierens des Reifens (1) in einem Zustand ausgeführt werden, in dem die einzelnen Metalldrähte auf eine solche Weise gedehnt sind, dass das initiale Vorformen der einzelnen Metalldrähte in einem mittleren Abschnitt der Verstärkungsschicht (10), die über der Äquatorebene des Reifens liegt, aufgehoben wird und dass eine Restvorformung in den einzelnen Metalldrähten in zwei seitlichen Randabschnitten der Verstärkungsschicht (10) verbleibt.

## Revendications

1. Pneumatique (1) pour véhicules motorisés, avec une structure de ceinture améliorée, comprenant:
- une structure de carcasse (2) comprenant au moins une nappe de carcasse ayant des filaments de renfort orientés sensiblement dans les plans radiaux contenant l'axe de rotation du pneumatique;
- une bande de roulement (4) s'étendant circonférentiellement autour de la dite structure de carcasse (2);
- une structure de ceinture (3) intercalée circonférentiellement entre la structure de carcasse (2) et la bande de roulement (4), comprenant au moins une paire de nappes (5,7) radialement superposées l'une sur l'autre, chaque nappe (5,7) ayant une pluralité de cordes (6,8) orientées obliquement selon un angle compris entre 10° et 30° par rapport au plan équatorial (p-p) du pneumatique (1), parallèles les unes aux autres dans chaque nappe et croisant ceux de la nappe adjacente, et une couche de renfort (10) externe radialement à ladite au moins une paire de nappes de ceinture (5, 7), et ayant des éléments de renfort (11) sensiblement parallèles entre eux et au susdit plan équatorial (p-p), lesdits éléments de renfort (11) comprenant des fils métalliques uniques sensiblement rectilinéaires qui montrent des traces d'une préformation initiale faite sur eux avant insertion dans le pneumatique qui a ensuite été partiellement ou totalement Interrompue.

2. Pneumatique (1) selon la revendication 1, **caractérisé en ce que** lesdits fils métalliques uniques sensiblement rectilinéaires ont des déformations résiduelles de préformation.

3. Pneumatique (1) selon la revendication 2, **caractérisé en ce que** lesdits fils métalliques uniques ont un taux de préformation résiduelle compris entre 0.95 et 1.

4. Pneumatique (1) selon la revendication 1, **caractérisé en ce que** lesdits fils métalliques uniques sont choisis parmi le groupe comprenant: acier, aluminium et alliages métalliques.

5. Pneumatique (1) selon la revendication 4, **caractérisé en ce que** lesdits alliages métalliques sont des alliages d'aluminium.

6. Pneumatique (1) selon la revendication 4, **caractérisé en ce que** lesdits fils uniques d'acier ont un revêtement choisi parmi le groupe comprenant:
cuivre, zinc, alliages zinc-manganèse, et alliages zinc-cobalt.

7. Pneumatique (1) selon la revendication 1, **caractérisé en ce que** lesdits fils métalliques uniques ont un diamètre compris entre 0.10 mm et 0.40 mm.

8. Pneumatique (1) selon la revendication 1, **caractérisé en ce que** les déformations desdits fils uniques sont coplanaires,

9. Pneumatique (1) selon la revendication 1, **caractérisé en ce que** les déformations desdits fils uniques consistent en des formes d'onde sensiblement sinusoïdales.

10. Pneumatique (1) selon la revendication 9, **caractérisé en ce que** lesdites déformations sensiblement sinusoïdales ont une longueur d'onde (P) comprise entre 3 mm et 9 mm.

11. Pneumatique (1) selon la revendication 9, **caractérisé en ce que** lesdites déformations sensiblement sinusoïdales ont une amplitude (H) comprise entre 0.3 mm et 1.5 mm.

12. Pneumatique (1) selon la revendication 1, **caractérisé en ce que** lesdits fils métalliques uniques sont distribués dans ladite couche de renfort (10) avec un espacement axial constant entre eux.

13. Pneumatique (1) selon l'une des revendications 1 ou 2, **caractérisé en ce que** lesdits fils métalliques uniques sensiblement rectilinéaires ont des déformations de préformation résiduelles augmentant dans une direction axiale vers les bords de la dite couche de renfort (10).

14. Pneumatique (1) selon la revendication 1, **caractérisé en ce que** lesdites traces comprennent des tensions internes subies par les grains cristallins desdits fils métalliques uniques.

15. Pneumatique (1) selon la revendication 1, **caractérisé en ce que** la valeur du taux de préformation (L1/L0) de ladite préformation des fils métalliques uniques avant insertion dans le pneumatique n'est pas inférieure à 0.90.

16. Pneumatique (1) selon la revendication 15, **caractérisé en ce que** ladite valeur du ratio de préformation (L1/L0) de ladite préformation du fil métallique unique avant insertion dans le pneumatique est comprise entre 0.90 et 0.98.

17. Procédé pour produire un pneumatique (1), comprenant les étapes:
- faire une structure de carcasse (2), et
- appliquer une structure de ceinture (3) dans une position circonférentiellement externe à la dite structure de carcasse (2), la dite structure de ceinture (3) comprenant au moins une paire de nappe de ceinture (5,7) radialement superposées l'une à l'autre, chaque nappe (5,7) ayant une pluralité de cordes (6,8) orientées obliquement selon un angle compris entre10° et 30° par rapport au plan équatorial (p-p) du pneumatique (1), parallèles aux autre dans chaque nappe et croisant ceux de la nappe adjacente, et une couche de renfort (10) radialement externe à ladite au moins une paire de nappe de ceinture (5,7), et ayant des fils métalliques uniques (11) sensiblement parallèles les uns aux autres et au plan équatorial (p-p) dudit pneumatique(1), les dits fils métalliques uniques (11) étant appliqués dans un état dans lequel ils sont préformés selon un certain taux initial de préformation, et
- appliquer une bande de roulement (4) dans une position externe circonférentiellement à ladite structure de ceinture (3), et
- appliquer à la dite structure de carcasse (2) au moins une paire de parois dans des positions latéralement opposées, et
- mouler et vulcaniser le pneumatique produit de cette manière, et étirer lesdits fils métalliques uniques (11) durant ladite étape de moulage d'un montant qui n'excède pas la contraction de préformation subie par lesdits fils métalliques uniques (11) de façon à obtenir des fils métalliques uniques sensiblement rectilinéaires (11) qui montrent des traces de ladite préformation qui a ensuite été partiellement ou totalement annulée, et
**caractérisé en ce que** la dite couche de renfort (10) de la structure de ceinture (3) s'étend à travers le plan équatorial du pneumatique (1).

18. Procédé selon la revendication 17, dans lequel ladite étape d'application de la couche de renfort (10) externe radialement à ladite au moins une paire de nappes de ceinture (5, 7) est une opération d'enroulement en spirale.

19. Procédé selon la revendication 17, dans lequel lesdits fils métalliques uniques sensiblement rectilinéaires ont des déformations de préformation résiduelles.

20. Procédé selon l'une des revendications 17 ou 19, dans lequel les dites étapes de moulage et vulcanisation du pneumatique (1) sont effectuées dans un état dans lequel lesdits fils métalliques uniques sont étirés de sorte que la préformation initiale desdits fils métalliques uniques est annulée dans une portion centrale de ladite couche de renfort (10), posée sur le plan équatorial dudit pneumatique, et qu'une préformation résiduelle est laissée dans lesdits fils métalliques uniques dans deux portions de bordure latérales de la dite couche de renfort (10).
